# EUROPÄISCHE PATENTANMELDUNG

(11) **EP 1 870 485 A1**
(43) Veröffentlichungstag der Anmeldung: **26.12.2007**
(21) Anmeldenummer: 06012856.8
(22) Anmeldetag: 22.06.2006
(51) Int. Cl.: C23C 10/18, C23C 10/28, C23C 10/48, C23C 10/60, C23C 12/02, B23P 6/00, C09D 5/20, F01D 5/28, C08G 77/00

(54) **Zusammensetzung und Verfahren zur Metallisierung eines Bauteils**

(71) Anmelder: SIEMENS AKTIENGESELLSCHAFT, 80333 München (DE)
(72) Erfinder: Jabado, Rene, 14199 Berlin (DE); Karmazin, Roman, Dr., 81673 München (DE); Körtvelyessy, Daniel, 13469 Berlin (DE); Reiche, Ralph, 13465 Berlin (DE); Rindler, Michael, 15566 Schöneiche (DE); Walter, Steffen, Dr., 85667 Oberpframmern (DE)

(57) **Zusammenfassung**

Bauteile müssen oft alitiert oder chromiert werden. Dabei werden geförderte Eindringtiefen oft nicht erreicht.

Das erfindungsgemäße Verfahren zur Metallisierung eines Bauteils (1) besteht darin, eine Zusammensetzung aus Si-O-Si und/oder Si-O-C-Ketten und einem Metall zu verwenden.

## Beschreibung

Die Erfindung betrifft eine Zusammensetzung und eine Metallisierung eines Bauteils.

In heutigen modernen Energieerzeugungsanlagen, wie z.B. Gasturbinenanlagen, spielt der Wirkungsgrad eine wichtige Rolle, weil dadurch die Kosten für den Betrieb der Gasturbinenanlagen reduziert werden können.

Eine Möglichkeit, den Wirkungsgrad zu erhöhen und damit die Betriebskosten zu reduzieren, besteht darin, Einlasstemperaturen eines Verbrennungsgases innerhalb einer Gasturbine zu erhöhen.

Aus diesem Grunde wurden keramische Wärmedämmschichten entwickelt, die auf thermisch belasteten Bauteilen, bspw. Superlegierungen, aufgebracht werden, die alleine den hohen Einlasstemperaturen auf Dauer nicht mehr standhalten könnten. Die keramische Wärmedämmschicht bietet den Vorteil einer hohen Temperaturresistenz aufgrund ihrer keramischen Eigenschaften und das metallische Substrat bietet den Vorteil der guten mechanischen Eigenschaften in diesem Verbund- oder Schichtsystem.
Typischerweise ist zwischen dem Substrat und der keramischen Wärmedämmschicht eine Haftvermittlungsschicht der Zusammensetzung MCrAlX (Hauptbestandteile) aufgebracht, wobei M bedeutet, dass ein Metall aus Nickel, Chrom oder Eisen verwendet wird oder die Oberfläche wird alitiert, chromiert und/oder platiniert.

Ein Verfahren zur Entfernung von Korrosionsprodukten ist aus der US-PS 6,217,668 bekannt. Bei diesem Verfahren wird das korrodierte Bauteil in einem großen Tiegel untergebracht, wobei das Bauteil in einem Pulverbett mit einer Aluminiumquelle angeordnet ist. Der Tiegel muss teilweise abgeschlossen und dann in einem Ofen erwärmt werden. Durch den Wärmeprozess wird dem korrodierten Bauteil Aluminium zugeführt, wodurch sich die Bereiche durch eine anschließende Säurebehandlung entfernen lassen, die sich vorher schlechter abtragen ließen, also eine höhere Abtragungsresistenz aufwiesen.

Es ist daher Aufgabe der Erfindung, ein Verfahren zur Metallisierung eines Bauteils mit einer entsprechenden Zusammensetzung aufzuzeigen, mittels der eine Metallisierung verbessert durchgeführt werden kann.

Die Aufgabe wird gelöst durch eine Zusammensetzung gemäß Anspruch 1 und ein Verfahren gemäß Anspruch 27.

In den Unteransprüchen sind weitere vorteilhafte Maßnahmen aufgelistet, die jeweils miteinander kombiniert weitere Vorteile ergeben.

In den Figuren sind Ausführungsbeispiele des erfindungsgemäßen Verfahrens dargestellt.
- Figur 1: perspektivisch eine Turbinenschaufel,
- Figur 2, 3: Anwendungsbeispiele für die Zusammensetzung,
- Figur 4a: zeigt ein korrodiertes metallisches Bauteil,
- Figur 4b: ein Bauteil, bei dem eine Reinigungspaste aufgetragen ist, die eine metallische Komponente enthält, die durch einen weiteren Verfahrensschritt in den korrodierten Bereich (Fig. 4c) eindringt und erst so ein Ablösen des korrodierten Bereich des Bauteils ermöglicht (Fig. 4d), und
- Figur 5a, b: zeigt ein Schichtsystem, bei dem eine Schicht korrodierte Bereiche aufweist,
- Figur 6: eine Gasturbine und
- Figur 7: perspektivisch eine Brennkammer.

### Beschreibung der Ausführungsbeispiele

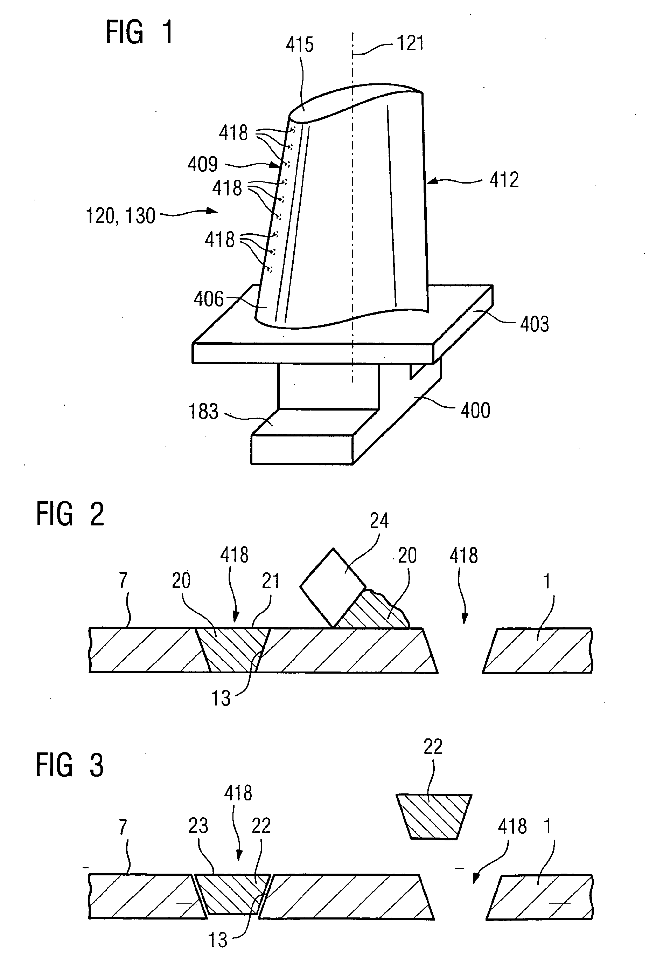

Die Figur 1 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt ; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX ; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrA1X-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Das Einbringen von Füllmaterial in die Öffnungen 418 der Turbinenschaufel 120, 130 ist in den Figuren 2 und 3 dargestellt.

Die Zusammensetzung weist erfindungsgemäß eine siliziumhaltige Kettenverbindung, insbesondere -Si-O-Si-Ketten (Keramisierung erfolgt an Luft) und/oder -Si-O-C-Ketten (Keramisierung erfolgt in Argon, Vakuum) und zumindest ein Metall (Me) und optional Kohlenstoff (C) auf.
Vorzugsweise werden auch von Vorstufen des Typs Polysilan (Si-Si), Polycarbosilan (Si-C), Polysilazan (Si-N) oder Polybarosilazan (Si-B-C-N) oder Mischungen davon verwendet. Die siliziumhaltigen Kettenverbindungen, insbesondere Si-O-C-Ketten oder Si-O-Si-Ketten sind vorzugsweise aus einem Polysiloxan-Harz hergestellt. Polysiloxan-Harze sind polymerkeramische Vorstufen der Strukturformel XSiO_{1,5}, wobei X =-CH₃, -CH, -CH₂, -C₆Hₛ etc. sein kann. Das Material wird thermisch vernetzt, wobei anorganische Bestandteile (Si-O-Si-Ketten) und organische Seitenketten überwiegend aus X nebeneinander vorliegen. Anschließend werden die Vorstufen über eine Temperaturbehandlung in Ar, N₂, Luft- oder Vakuum-Atmosphäre bei Temperaturen zwischen 600°C und 1200°C keramisiert. Dabei wird das polymere Netzwerk zersetzt und über thermische Zwischenstufen von amorphen bis kristalline Phasen neu strukturiert, wobei ausgehend von Polysiloxan-Vorstufen ein Si-O-C- oder Si-O-Si-Netzwerk entsteht.
Vorzugsweise kann auch ein Gemisch aus -Si-O-C-Ketten und -Si-O-Si-Ketten verwendet werden.

Das Metall (Me) ist ausgewählt aus der Gruppe: Aluminium (A1), Chrom (Cr) und/oder Platin (Pt).

Die Zusammensetzung kann ein Gemisch aus den Kettenverbindungen -Si-O-Si und/oder Si-O-C-Ketten und einen Metallpulver (Me) sein, das ein, zwei oder alle drei Metalle enthält.
Das Metall kann auch ein Kettenglied der siliziumhaltigen Kettenverbindung sein: -Si-Me-O-, Me-Si-O-Si-, Me-Si-O-C. Ebenso kann die Zusammensetzung ein Gemisch aus beiden sein.

Die Zusammensetzung kann Si-O-Ketten und Metall/Kohlenstoff aufweisen, wobei der Kohlenstoff vorzugsweise aus einem Binder stammt und mit -Si-O-Si- zu -Si-O-C-Ketten reagiert.

Ebenso kann es vorteilhaft sein, kein Kohlenstoff in der Zusammensetzung zu verwenden.

Eine vorteilhafte Zusammensetzung besteht aus nur einem Metall und Si-O-C-Ketten.

Vorteilhafte Zusammensetzungen sind hier aufgelistet:
(+Me bedeutet: Mischung mit Metallpulver; -Me: Metall in Kettenverbindung; +: Mischung; C: Kohlenstoff; Me kann immer ein, zwei oder drei Metalle bedeuten)
- -Si-O-Si- + Me
- -Si-O-Si-Me
- -Si-O-Si-Me + Me
- -Si-O-C- + Me
- -Si-O-C-Me
- -Si-O-C-Me + Me
- -Si-O-Si- + Me + -Si-O-Si-Me
- -Si-O-Si- + Me + -Si-O-C-
- -Si-O-Si- + Me + -Si-O-C-Me
- -Si-O-Si-Me + -Si-O-C-
- -Si-O-Si-Me + -Si-O-C-Me
- -Si-O-Si-Me + -Si-O-C-Me + Me
- -Si-O-Si-Me + Me + -Si-O-C + Me
- -Si-O-Si-Me + Me + -Si-O-C-Me
- -Si-O-Si- + Me + C
- -Si-O-Si-Me + C
- -Si-O-Si-Me + Me + C
- -Si-O-C- + Me + C
- -Si-O-C-Me + C
- -Si-O-C-Me + Me + C
- -Si-O-Si- + Me + -Si-O-Si-Me + C
- -Si-O-Si- + Me + -Si-O-C- + C
- -Si-O-Si- + Me + -Si-O-C-Me + C
- -Si-O-Si-Me + -Si-O-C- + Me + C
- -Si-O-Si-Me + -Si-O-C-Me + C
- ₋Si-O-Si-Me + -Si-O-C-Me + Me + C
- -Si-O-Si-Me + Me + -Si-O-C + C
- -Si-O-Si-Me + Me + -Si-O-C-Me + C

Der Anteil von dem Metall/den Metallen hat vorzugsweise maximal 60vol%, insbesondere maximal 50vol%. Der Anteil liegt vorzugsweise zwischen 20vol% und 50vol%.

Vorzugsweise weist die Zusammensetzung nur ein Metall auf. Ein bevorzugtes Anwendungsbeispiel ist die Verwendung von Aluminium in der Zusammensetzung, das zur Alitierung eines Bauteils benutzt wird.
Vorteilhafterweise werden auch zwei Metalle verwendet.

Vorzugsweise besteht die Zusammensetzung aus zumindest einem Metall ausgewählt aus der Gruppe Aluminium, Chrom, Platin und einer Kettenverbindung ausgewählt aus der Gruppe Si-O-Si, Si-O-C.

Die erfindungsgemäße Zusammensetzung kann zur Metallisierung eines Bauteils 1, 120, 130 verwendet werden.
Dabei wird die Zusammensetzung in geeigneter Form auf das Bauteil 1 aufgebracht und erwärmt, wobei dann das Metall in das Bauteil 1 über eine Gasphase hinein diffundiert.
Bei der Erwärmung bilden die Kettenverbindungen Gase, die als Träger für das Metall wirken und durch eine hohe Porosität der Si-O-C-Keramik eine gute Durchlässigkeit für die Gase gewährleistet ist. Die Temperaturen für die Metallisierung liegen bei 850°C und 1080°C, insbesondere für Aluminium.

Wenn die Zusammensetzung ein Kühlloch während der MCrA1X-Beschichtung (850°C) und der Anbindungs-Wärmebehandlung (1080°C) sich befindet, insgesamt 2.5 h, ergibt sich eine Eindringtiefe von 50µm.

Vorzugsweise enthält die Zusammensetzung nur ein Metall, das dann in das Bauteil 1 hinein diffundiert, vorzugsweise wird eine Alitierung des Bauteils 1 durchgeführt.

Ebenso können mehrere Metalle durch die Zusammensetzung auf das Bauteil 1 aufgebracht und hinein diffundiert gelassen werden.
Vorzugsweise kann die Metallisierung bei Nickel- oder Kobaltbasierten Substraten durchgeführt werden, da diese Bauteile 120, 130 (Fig. 1), 155 für Hochtemperaturanwendungen geeignet sind.
Die Metallisierung oder Alitierung kann bei neu hergestellten Bauteilen 1, 120, 130, 155, nach dem Gießen, oder bei gebrauchten Bauteilen 1, 120, 130, 155 durchgeführt werden, bei denen eine Verarmung an Aluminium stattgefunden hat oder eine Alitierung gewünscht ist, um einen Korrosionsschutz zu erreichen.
Ebenso kann das Verfahren benutzt werden, um Kühllöcher 418 oder Hohlräumen an inneren Oberflächen zu alitieren.
Neben der Metallisierung des Bauteils 1, das dann wieder eingesetzt werden soll, kann eine Metallisierung, insbesondere eine Alitierung durchgeführt werden, um in einem weiteren Schritt leichter Schichten von einem gebrauchten Bauteil zu entfernen.
Ebenso kann die Zusammensetzung als Füllstoff oder Füllkörper von Kühlluftlöchern 418 (Fig. 1) (Durchgangslöcher) verwendet werden, da die Zusammensetzung hochtemperaturstabil ist und aufgrund des Metallgehalts eine einstellbare gewisse elektrische Leitfähigkeit aufweist.

Dabei verschließt das Material aus der Zusammensetzung das Kühlluftloch und schützt dieses vorzugsweise bei einer Beschichtung des Substrats, vorzugsweise bei einer MCrAlX-Beschichtung.

Die Zusammensetzung kann als Schlicker, Folie oder teilausgehärteter Festkörper vorhanden sein und auf das Bauteil 1, 120, 130, 155 aufgebracht werden.
Nach der Keramisierung (Pyrolyse) kann die Keramik aufgrund ihrer Sprödheit sehr leicht entfernt werden, insbesondere durch Trockeneisstrahlen, durch Ultraschallbehandlung oder durch Wasserstrahlbehandlung.

Wenn die Zusammensetzung als Paste in Öffnungen (Fig. 2) eingestrichen oder eingespritzt wird, erfolgt anschließend eine Vernetzung der Polymerbestandteile, also beispielsweise des anorganischen und/oder organischen Binders oder des siliziumorganischen Bindemittels, mittels eines Heizschrittes, der vorzugsweise bei Temperaturen von etwa 200°C stattfindet, um eine vorläufige Formstabilität des keramischen Materials vor dem Durchführen des Beschichtungsverfahrens herzustellen. Wenn, wie in Figur 3 dargestellt, die Zusammensetzung als grüner Formkörper (Grünling) eingesetzt wird, so muss zuvor eine Vernetzung oder zumindest eine Teilvernetzung der Zusammensetzung erfolgt sein, um die Formstabilität des Formkörpers bereits vor dem Einsetzen in die Öffnungen zu gewährleisten. Die Vernetzung bzw. Teilvernetzung erfolgt dabei durch eine geeignete Wärmebehandlung mit Temperaturen von nicht mehr als ca. 200°C, in denen der anorganische und/oder organische Binder bzw. das siliziumorganische Bindemittel eine zumindest teilvernetzte Polymerarchitektur annimmt.
Im weiteren Verlauf erfolgt eine pyrolitische Umwandlung (Brennen bzw. Keramisierung) des in die Öffnungen eingebrachten Werkstoffes bei Temperaturen oberhalb ca. 400 bis 450°C, um die Keramisierung des Werkstoffes herbeizuführen. Dieser Brennvorgang kann in den Beschichtungsprozess integriert sein.

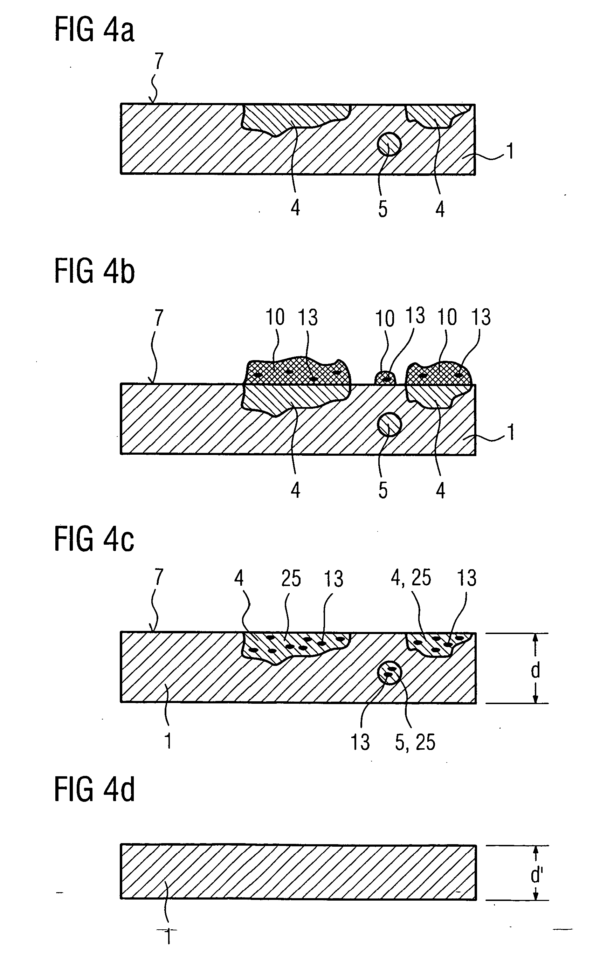

Figur 4a zeigt ein Bauteil 1 aus Metall, einer Metalllegierung oder aus einer Metallverbindung, das an einer Oberfläche 7 äußere Korrosionsprodukte 4 und/oder im Innern des Bauteils 1 innere Korrosionsprodukte 5 aufweist, die beispielsweise in getrennt voneinander ausgebildeten Gebieten vorhanden sind. Die Korrosionsprodukte 4 können auch zusammenhängend, oder auf der ganzen Oberfläche 7 vorhanden sein, also eine Korrosionsschicht bilden.

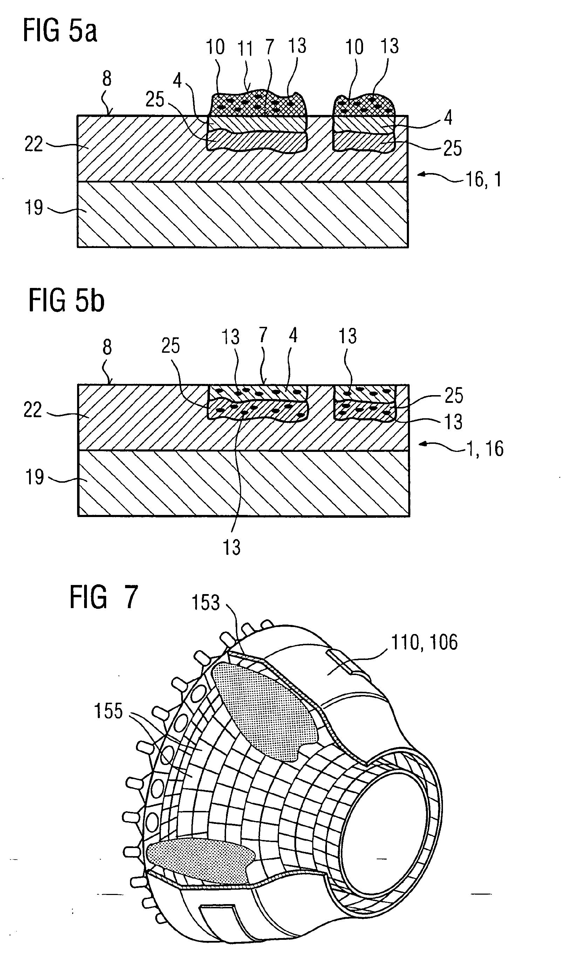

Das Bauteil 1, 120, 130, 155 kann massiv oder eine Schicht oder ein Bereich eines Verbund- oder Schichtsystems 16 sein (Fig. 5a). Die Korrosionsprodukte 4, 5 haben sich während des Einsatzes des Bauteils 1 gebildet und sind für den weiteren Einsatz des Bauteils 1 unerwünscht und müssen entfernt werden. Dies geschieht häufig durch eine Behandlung in einem Säurebad.

Es kommt jedoch vor, dass das Material des Bauteils 1 und die Korrosionsprodukte 4, 5 ein unterschiedliches Reaktionsvermögen in dem Säurebad aufweisen. Das unterschiedliche Auflösungsverhalten im Säurebad ist verursacht durch das unterschiedliche Auflösungsverhalten der Korrosionsprodukte 4, 5 oder weil eine ursprüngliche Zusammensetzung des Materials des Bauteils 1, z.B., weil das Korrosionsprodukt 4, 5 einem Bereich des Bauteils 1 im Bereich um das Korrosionsprodukt 4, 5, dem so genannten Verarmungsgebiet, eine Komponente entzieht, sich verändert hat. Daher kommt es zu einem ungleichmäßigen Abtrag oder zu keinem Abtrag der Korrosionsprodukte bzw. dem Material im Verarmungsgebiet.

Das erfindungsgemäße Verfahren ermöglicht es, die Korrosionsprodukte vollständig und gleichmäßig mit dem Material des Bauteils 1 zu entfernen.

Dabei kann bspw. in einem ersten Verfahrensschritt eine grobe Abtragung der Korrosionsprodukte öder anderer Bereiche durch mechanische Verfahren, wie z.B. Sandstrahlen, und/oder chemische Mittel, wie z.B. Säurebad, erfolgen.

In einem weiteren Verfahrensschritt wird ein mehrkomponentiges Reinigungsmittel 10 auf das korrodierte Bauteil 1, insbesondere in den Bereichen mit den Korrosionsprodukten 4, 5 aufgetragen, die in diesem Beispiel die abtragungsresistenteren Bereiche darstellen (Fig. 4).

Das Reinigungsmittel 10 enthält zumindest eine Imprägnierkomponente 13.
Das Reinigungsmittel weist vorzugsweise die erfindungsgemäße Zusammensetzung auf.

Die Imprägnierkomponente 13 wird auf das Bauteil 1 in Kontakt gebracht oder schlägt sich dort nieder und bildet dort bspw. eine Imprägnierschicht. Aus dieser Imprägnierschicht oder direkt aus der gasförmigen Verbindung diffundiert das Imprägniermittel in die Bereiche mit den Korrosionsprodukten 4, 5 ein. Die Imprägnierkomponente 13 ist dann zumindest teilweise in den Bereichen mit den Korrosionsprodukten 4, 5 vorhanden.

Der so gebildete Bereich, die so genannte Opferzone 25 (Fig. 4c), kann zusammen mit dem Material des Bauteils 1, beispielsweise durch ein Säurebad, in gleichmäßiger Abtragung entfernt werden.

Durch die Säurebehandlung verringert sich eine Dicke des Bauteils 1, die sich von einer Dicke d (Fig. 4c) zu einer kleineren Dicke d' (Fig. 4d).

Fig. 4d zeigt ein Bauteil 1 ohne innere und äußere Korrosionsprodukte 4, 5 aufgrund der Behandlung gemäß dem erfindungsgemäßen Verfahren.

Die Wahl des Materials der zumindest einen Imprägnierkomponente hängt von der Zusammensetzung des Materials des Bauteils 1 und/oder der Korrosionsprodukte 4, 5 ab.

Fig. 5a zeigt als ein Bauteil 1 ein Schichtsystem 16, das beispielsweise durch eine Turbinenschaufel oder Leitschaufel gebildet ist.

Das Schichtsystem 16 besteht in diesem Fall aus einem Substrat 19, beispielsweise einer Superlegierung, bspw. der Basis-Zusammensetzung Ni₃Al. Auf dem Substrat 19 ist eine Schicht 22 aufgebracht, beispielsweise der Zusammensetzung MCrA1X, wobei M für ein chemisches Element Cr, Ni oder Fe steht. Diese so genannte MCrA1X-Schicht bildet eine Korrosionsschutzschicht, die auch als Haftvermittlungsschicht für eine nicht dargestellte auf der Schicht 22 aufgebrachte keramische Wärmedämmschicht fungieren kann.

Während des Einsatzes des Schichtsystems 16 kommt es bspw. zur Oxidation, Nitridation oder Sulfidation der MCrAlY-Schicht 22, so das sich in der Schicht 22 Bereiche mit Korrosionsprodukten 4, 5 (nicht gezeigt) bilden.

Die Korrosionsprodukte 4, 5 bilden eine zumindest teilweise vorhandene Schicht in oder auf oder unter einer Oberfläche 7 Schicht des Bauteils 16.

Diese Korrosionsprodukte 4, beispielsweise Aluminiumoxid oder andere Aluminiumverbindungen, entziehen der MCrAlX-Schicht 22 Aluminium, so dass sich in der Umgebung des Bereichs mit den Korrosionsprodukten 4, hauptsächlich unter, d.h. in Richtung des Substrats 19, den Korrosionsprodukten, zumindest eine Opferzone 25 an aluminiumverarmten MCrAlX ausbildet. Diese verarmten Gebiete stellen in diesem Beispiel den abtragungsresistenteren Bereich dar.

Die MCrAlX-Schicht kann auch an Chrom (Cr) verarmen, so dass die Imprägnierkomponente 13 bspw. die Elemente Al und Cr aufweist.

Sowohl die Korrosionsprodukte 4 als auch die Opferzone 25 weisen im Säurebad gegenüber dem Material der Schicht 22, also dem MCrAlY, eine höhere Säureresistenz auf.

In einem ersten Verfahrensschritt kann eine grobe Abtragung der keramischen Wärmedämmschicht, der Korrosionsprodukte oder von anderen Bereichen durch mechanische Verfahren, wie z.B. Sandstrahlen, und/oder chemische Mittel, wie z.B. Säurebad, erfolgen.

Durch das Aufbringen des Reinigungsmittels 10 mit der Metallkomponente 13 und der anschließenden Erwärmung diffundiert die Metallkomponente 13, die in diesem Beispiel Aluminium enthält, sowohl in die Bereiche mit den Korrosionsprodukten 4 als auch in die Opferzonen 25 ein, so dass dort die zumindest eine Metallkomponente 13 vorhanden ist. Erst durch die Anreicherung mit der Metallkomponente 13 kann bei einer Säurebadbehandlung des Schichtsystems 16 eine bestimmte Schichtdicke der Schicht 22 (MCrAlX) gleichmäßig abgetragen werden.

Das Reinigungsmittel 10 kann auch mehrere metallische Komponenten 13 (Al, Cr) aufweisen, wenn das für die Zusammensetzung der Korrosionsprodukte oder der verarmten Opferzonen 25 erforderlich ist.

Bei der Wärmebehandlung des Teils 1 mit dem Reinigungsmittel 10 dringt Aluminium als Metallkomponente 13 in die zumindest eine Opferzone 25 ein bzw. ermöglicht es, dem Aluminium in das Bauteil 1 hineinzudiffundieren, indem es bspw. eine Imprägnierschicht bildet. Daher muss die Metallkomponente 13 nicht aufgeschmolzen werden. Es kann aber auch sein, dass sich die gasförmige Verbindung erst bei Temperaturen bildet, die oberhalb eines Schmelzpunktes der zumindest einen Imprägnierkomponente liegt, da bspw. eine Sublimation auftritt.

Die Wärmebehandlung kann im Vakuum oder in den Schutzgasen Wasserstoff und/oder Argon durchgeführt werden.

Das Reinigungsmittel 10 kann neben der Metallkomponente 13, der Trägersubstanz und dem Aktivierungsmittel noch einen bspw. organischen Binder (Carboxyl Methacrylat, Carboxyl Methylcellulose, oder ähnliche Verbindungen) aufweisen, so dass das Reinigungsmittel 10 eine pastenartige oder schlammartige Konsistenz aufweist, das sich so auf das korrodierte Bauteil 1 gut auftragen lässt und aufgrund des Binders auf dem Bauteil 1, 16 haften kann.

Es kann mit einer Flüssigkeit auch eine gießfähige Masse des Reinigungsmittels 10 erstellt werden, in der das Bauteil 1 eingetaucht wird, wobei das Reinigungsmittel 10 auf der Oberfläche 7 des Bauteils 1 nach dem Vertrocknen der Flüssigkeit haften bleibt.

Die Erfindung ist nicht beschränkt auf die genannten Auftragungsverfahren.

Nach einer bestimmten Wärmebehandlungsdauer des Bauteils 1 mit dem Reinigungsmittel 10 verringert sich die Konzentration der Metallkomponente 13 in dem der Oberfläche 7 zugewandten Bereich des Reinigungsmittels 10. Aus diesem Bereich kann nur noch geringfügig eine Metallkomponente 13 oder keine Metallkomponente 13 mehr in das Bauteil 1 diffundieren. Ein weiteres, gewünschtes Eindringen der Metallkomponente 13 in die Tiefe des Materials 1 findet nur durch weitere Diffusion der bereits eindiffundierten Metallkomponente 13 statt. Jedoch würde ein längeres Halten des Bauteils 1 bei erhöhter Temperatur dazu führen, dass von einer Oberfläche 11 des Reinigungsmittels 10 die Metallkomponente 13 über die gasförmige Verbindung zu Oberflächen 8 des Bauteils 1 gelangt, auf denen kein Reinigungsmittel 10 aufgetragen war und auch kein Eindringen der metallischen Komponente 13 oder der 2Reaktionsprodukte erwünscht ist.

Daher wird das Reinigungsmittel 10 in diesem Fall entfernt und ein weiteres, gewünschtes Eindringen der Metallkomponente 13 in die Tiefe des Materials 1 findet durch Diffusion der bereits in das Bauteil 1 eindiffundierten metallischen Komponente 13 aufgrund einer Thermobehandlung des Bauteils 1 ohne Reinigungsmittel 10 statt. Die Thermobehandlung wird bspw. durch ein Lösungsglühen des Bauteils 1 ermöglicht.

Die Entfernung des Reinigungsmittels 1 bereitet keine Probleme, da die metallische Komponente 13 nicht aufgeschmolzen ist.

Das Reinigungsmittel 10 kann lokal, insbesondere über den abtragungsresistenteren Bereichen, großflächig oder ganz auf das Bauteil 1, 16 aufgebracht sein.

### Parameterbeispiel:

Schichtmaterial: MCrAlX,
Tiefe der Korrosionsprodukte in der Schicht: 150µm (verarmter Al-Bereich),
Aufbringen des Reinigungsmittel 10 ergibt eine Opferzone 25 bis in eine Tiefe von 80µm bei einer Wärmebehandlung bei 925°C und 2h,
nach Entfernen des Reinigungsmittels findet die Thermobehandlung bei 1120°C für höchstens 20h statt: Opferzone 25 hat eine Tiefe von 150µm.

Die Dauer der Thermobehandlung bzw. die Temperatur kann anhand von Kalibrierungskurven (Diffusionstiefe in Abhängigkeit von Zeit und Temperatur) der räumlichen Ausdehnung der Korrosionsprodukte im Bauteil angepasst werden.

Nach der Aufbringung des Reinigungsmittels 10 kann vor der Erwärmung eine Maskenschicht aufgebracht werden, die verhindert, dass von der Oberfläche 11 des Reinigungsmittels 10 die metallische Komponente 13 zu Oberflächen 8 des Bauteils 1 gelangt, auf denen kein Reinigungsmittel aufgetragen war und auch kein Eindringen der metallischen Komponente 13 erwünscht ist. So kann das Reinigungsmittel 10 auf dem Bauteil 1 verbleiben und trotzdem ein Lösungsglühen durchgeführt werden, um oben beschriebenen Effekt zu erreichen.

Die Erfindung ist nicht beschränkt auf Teile von Gasturbinen 100, sondern funktioniert auch bei Bauteilen, die zumindest eine Schicht, bspw. eine Oxidationsschutzschicht, Säureschutzschicht oder Korrosionsschutzschicht aufweisen.

Ebenso ist die Erfindung nicht beschränkt auf Bauteile, die keine Schichten aufweisen, deren Korrosionsprodukte aber entfernt werden müssen, wie z.B. bei Reaktionsgefäßen in der chemischen Industrie.

Im in Figur 2 dargestellten Verfahren zum Einbringen des keramischen Werkstoffes 20 aus der Zusammensetzung liegt der keramische Werkstoff 20 als Paste vor. Mittels einer spachtelartigen Vorrichtung 24 wird die Masse in die Öffnungen 418 eingestrichen, sodass die Oberfläche 7 des keramischen Werkstoffes 20 nach dem Einstreichen in die Öffnungen bündig mit der Oberfläche 7 der Turbinenschaufel 120, 130 abschließt, d.h. nicht über die Oberfläche 7 der Turbinenschaufel 120, 130 vorsteht. Statt einem Einstreichen der Paste in die Öffnungen ist auch ein Einspritzen der Paste möglich.

Eine Alternative zum Einbringen des keramischen Werkstoffes ist in Figur 3 dargestellt.
Diese Alternative eignet sich insbesondere für das Einbringen des keramischen Werkstoffes in Öffnungen 418 mit relativ großem Durchmesser, wie sie etwa in der Basisplatte 403 zu finden sein können. Gemäß der zweiten Variante wird der keramische Werkstoff im teilvernetzten, sog. grünen Zustand als Formkörper in die Öffnungen eingesetzt.
Ebenso kann ein nicht mehr auszuhärtender Formkörper verwendet werden.

Beim Brennen verdichtet sich der keramische Werkstoff. Außerdem werden Poren im Werkstoff mit offener oder geschlossener Porosität ausgebildet.
Das Verdichtungsverhalten und die Porenverteilung im ausgehärteten Werkstoff hängen dabei zum einen von der Wahl des Bindemittels, beispielsweise von der Kohlenstoffkonzentration im Bindemittel, und zum anderen von den Partikeldurchmessern des Füllstoffes ab. Bei der Wahl des Bindemittels sowie geeigneter Partikeldurchmesser des Füllstoffes sollte darauf geachtet werden, dass die resultierenden Poren eine ausreichende Stabilität des ausgehärteten Werkstoffes gewährleisten und nicht so groß sind, dass das Beschichtungsmaterial durch die Poren hindurch die Wände der Öffnungen erreicht.

Der Brennvorgang findet in Abhängigkeit von der Art des verwendeten Bindemittels und der Art der herzustellenden Keramik entweder unter Luftausschluss, beispielsweise in einer Inertgasatmosphäre, oder in einer Luftatmosphäre statt.

Wenn ein auf Kohlenstoff basierendes Bindemittel auf Basis eines organischen Binders Verwendung findet, findet der Brennvorgang unter Luftausschluss statt, damit der Kohlenstoff nicht zu CO oder CO₂ oxidiert wird. Beim Verbrennungsprozess unter Inertgas verbleiben bis zu 90% des Kohlenstoffs im Werkstoff. Wenn der Füllstoff Metallpulver umfasst, können dabei metallcarbidische Phasen entstehen. Es können auch Metalle ausgewählt werden, die keine Karbide bei den Beschichtungs- oder Bearbeitungstemperaturen bilden.

Wenn siliziumorganische Bindemittel, wie Siloxane oder Silikone, Verwendung finden, so können beim Brennen siliziumkarbidische Phasen (beim Brennen unter Luftausschluss) oder siliziumoxidische Phasen (beim Brennen in Luft) erzeugt werden. Mittels der Zusammensetzung der Atmosphäre, unter der der Brennvorgang stattfindet sowie der Zusammensetzung des siliziumorganischen Bindemittels kann - dabei eingestellt werden, wie hoch nach dem Brennvorgang der Anteil oxidischer Phasen im Verhältnis zu carbidischen Phasen ist.
Beim Brennen ist ein stufenloses Einstellen Anteils an Siliziumoxid im keramischen Werkstoff nach dem Brennvorgang möglich.

Die Zusammensetzung des Bindemittels, die Zusammensetzung des Füllmaterials, sowie die Temperatur und die Dauer des Brennvorgangs können im erfindungsgemäßen keramischen Werkstoff derart gewählt werden, dass dieser lediglich im Bereich seiner Oberfläche bzw. seiner Kontaktfläche 13 zum Metall vollständig aushärtet. Im Inneren seines Volumens befindet sich der keramische Werkstoff dann in einem nicht ausgehärteten, vernetzten oder teilvernetzten Zustand. Dadurch wird das Entfernen des keramischen Werkstoffes nach dem Beschichtungsvorgang mittels eines Strahlprozesses erleichtert.

Das Entfernen des keramischen Werkstoffes kann, wenn seine Zusammensetzung und die Aushärtungsbedingungen geeignet gewählt worden sind, mittels Trockeneisstrahlen aus den Öffnungen entfernt werden. Das Entfernen mittels Trockeneisstrahlen beeinträchtigt beispielsweise metallische MCrAlX-Beschichtungen nicht. Außerdem ist ein "Auswaschen" der Beta-Phase der MCrAlX-Beschichtung gänzlich ausgeschlossen.

Das erfindungsgemäße keramische Material kann gegebenenfalls zusätzlich in Spuren, d.h. mit einem Volumenanteil von kleiner ca. 1%, Additive umfassen. Als Additive kommen etwa Katalysatoren in Frage, die eine Vernetzung des Bindemittels bei Temperaturen unterhalb von ca. 200°C fördern. Als ein solcher Katalysator kann z.B. Platin eingesetzt werden. Auch Additive zum Beeinflussen der Oberflächenspannung des Lösungsmittels und damit zur gezielten Substrathaftung sind denkbar.

Im Ausführungsbeispiel wird das erfindungsgemäße Verfahren zum Schützen von Öffnungen eines aus einem Grundwerkstoff auf Metallbasis hergestellten Bauteils gegen ein Eindringen von Beschichtungsmaterial bei einem Wiederbeschichten des Bauteils beschrieben. Das Verfahren kann aber auch bei einem Erstbeschichten vorteilhaft zum Einsatz kommen, wenn vor dem Erstbeschichten bereits zu schützende Öffnungen im Bauteil vorhanden sind.

Ein weiterer Anwendungsbereich des erfindungsgemäßen keramischen Werkstoffes bietet sich bei Lötprozessen an. So werden etwa beim Löten von Turbinenschaufeln sog. "Stop-offs" benutzt, um Kühlluftbohrungen gegen das Eindringen von Lot zu schützen. Statt der "Stop-offs" kann in vorteilhafter Weise der erfindungsgemäße keramische Werkstoff zum Schutz der Kühlluftbohrungen zum Einsatz kommen. Der keramische Werkstoff muss nach dem Löten nicht aus den Öffnungen entfernt werden und kann für einen anschließenden Beschichtungsprozess in den Öffnungen verbleiben. So können Prozessschritte eingespart und Durchlaufzeiten gesenkt werden.

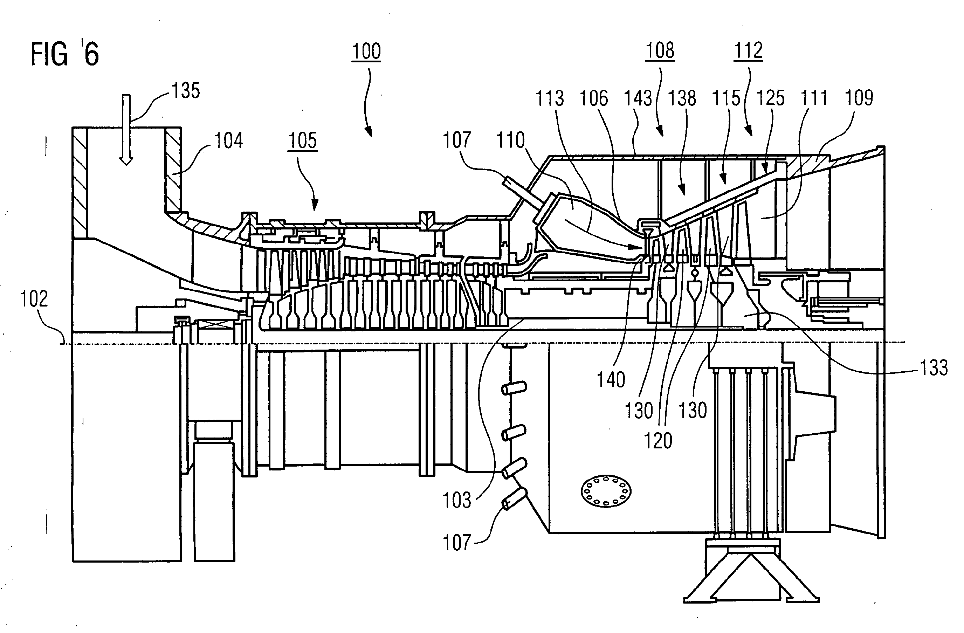

Die Figur 6 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Ebenso können die Schaufeln 120, 130 Beschichtungen gegen Korrosion (MCrA1X; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die bzgl. der chemischen Zusammensetzung Teil dieser Offenbarung sein sollen.

Auf der MCrAlX kann noch eine Wärmedämmschicht vorhanden sein, und besteht beispielsweise aus Zr0₂, Y₂0₃-Zr0₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 7 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

## Patentansprüche

1. Zusammensetzung
enthaltend
zumindest ein Metall (Me) ausgewählt aus der Gruppe (A1, Cr, Pt),
eine siliziumhaltige Kettenverbindung und optional Kohlenstoff (C),
insbesondere bestehend aus
einem Metall (Me) ausgewählt aus der Gruppe (Al, Cr, Pt),
einer siliziumhaltigen Kettenverbindung und optional Kohlenstoff (C).

2. Zusammensetzung nach Anspruch 1, bei der das Metall Aluminium (A1) ist.

3. Zusammensetzung nach Anspruch 1 oder 2, bei der das Metall Chrom (Cr) ist.

4. Zusammensetzung nach Anspruch 1, 2 oder 3, bei der das Metall Platin (Pt) ist.

5. Zusammensetzung nach Anspruch 1, 2, 3 oder 4, die nur ein Metall (Me) aufweist.

6. Zusammensetzung nach Anspruch 1, 2, 3 oder 4, die nur zwei verschiedene Metalle (Me) aufweist.

7. Zusammensetzung nach Anspruch 1,
bei der Polysiloxane für die siliziumhaltige Kettenverbindung verwendet werden.

8. Zusammensetzung nach Anspruch 1 oder 7,
die als Kettenverbindung -Si-O-Si- und -Si-O-C- aufweist.

9. Zusammensetzung nach Anspruch 1 oder 7,
die nur -Si-O-Si- als Kettenverbindung aufweist.

10. Zusammensetzung nach Anspruch 1 oder 7,
die nur -Si-O-C- als Kettenverbindung aufweist.

11. Zusammensetzung nach Anspruch 1, 7, 8, 9 oder 10,
bei der das Metall (Me) Teil der siliziumhaltigen Kettenverbindung ist,
insbesondere Me-Si-O-Si- und/oder Me-Si-O-C-.

12. Zusammensetzung nach Anspruch 1, 7, 8, 9, 10 oder 11, bei der das Metall nur in metallhaltigen Kettenverbindungen enthalten ist.

13. Zusammensetzung nach einem oder mehreren der vorherigen Ansprüche 1 bis 11,
bei der das Metall als Metallpulver vorliegt.

14. Zusammensetzung nach Anspruch 1, 7, 8, 9, 10 oder 13, bei der das Metall (Me) nur als Metallpulver vorliegt.

15. Zusammensetzung nach Anspruch 1, 7 bis 11 oder 13, die eine Mischung aus metallhaltigen Kettenverbindungen, Metallpulver und/oder nicht metallhaltigen Kettenverbindungen aufweist.

16. Zusammensetzung nach einem oder mehreren der vorherigen Ansprüche,
die kein Kohlenstoff (C) enthält.

17. Zusammensetzung nach einem oder mehreren der vorherigen Ansprüche bis 15,
die Kohlenstoff (C) enthält.

18. Zusammensetzung nach Anspruch 1, 9, 14, 16 oder 17,
die aus einem Gemisch aus
- Si-O-Si-Ketten,
einem Metallpulver und optional Kohlenstoff besteht.

19. Zusammensetzung nach Anspruch 1, 9, 12, 16 oder 17, die aus
- Si-O-Si-Me-Ketten und optional Kohlenstoff besteht.

20. Zusammensetzung nach Anspruch 1, 9, 11, 13, 16 oder 17, die aus
- Si-O-Si-Me-Ketten,
einem Metallpulver und
optional Kohlenstoff besteht.

21. Zusammensetzung nach Anspruch 1, 10, 14, 16 oder 17,
die aus einem Gemisch aus
- Si-O-C-Ketten,
einem Metallpulver und optional Kohlenstoff besteht.

22. Zusammensetzung nach Anspruch 1, 10, 12, 16 oder 17, die nur aus
- Si-O-C-Me-Ketten und optional Kohlenstoff besteht.

23. Zusammensetzung nach Anspruch 1, 10, 11, 13, 16 oder 17, die aus
- Si-O-C-Me-Ketten,
einem Metallpulver und optional Kohlenstoff besteht.

24. Zusammensetzung nach einem oder mehreren der Ansprüche, die maximal 60 vol% Metall aufweist,
insbesondere maximal 50 vol%.

25. Zusammensetzung nach einem oder mehreren der Ansprüche, die mindestens 20 vol% Metall (Me) aufweist.

26. Zusammensetzung nach Anspruch 24 oder 25,
die zwischen 20 vol% und 50 vol% eines Metalls (Me) aufweist.

27. Verfahren zur Metallisierung eines Bauteils (1, 120, 130, 155),
in dem eine Zusammensetzung nach einem oder mehreren der Ansprüche 1 bis 26 verwendet wird,
die auf das Bauteil (1) aufgebracht und zur Metallisierung des Bauteils (1) erwärmt wird.

28. Verfahren nach Anspruch 27,
bei dem nur ein Metall auf das Bauteil (1) aufgebracht wird,
insbesondere bei dem eine Alitierung durchgeführt wird.

29. Verfahren nach Anspruch 27 oder 28,
bei dem ein nickel- oder kobaltbasiertes Substrat eines Bauteils (1, 120, 130, 155) behandelt wird.

30. Verfahren nach Anspruch 27, 28 oder 29,
bei dem das Bauteil (1, 120, 130, 155) in eine Zusammensetzung nach einem oder mehreren der Ansprüche 1 bis 26 eingebracht wird.

31. Verfahren nach Anspruch 27, 28 oder 29,
bei dem die Zusammensetzung nach einem oder mehreren der Ansprüche 1 bis 26 in ein Loch,
insbesondere ein Durchgangsloch (418),
eingebracht wird,
insbesondere bei der die Zusammensetzung zum Schützen von Löchern (418) beim Beschichten,
insbesondere bei einer MCrAlX-Beschichtung,
in Löcher (418) eingebracht wird.

32. Verfahren nach Anspruch 31,
bei dem die Zusammensetzung nach dem Beschichten eines Bauteils (1, 120, 130, 155) während einer Wärmebehandlung im Loch (418) verbleibt

33. Verfahren nach Anspruch 27, 28, 29, 30, 31 oder 32, bei der die Temperaturen zwischen 850°C und 1080°C liegen.

34. Verfahren nach Anspruch 27, 28, 29, 30 oder 33 zur Entfernung von Korrosionsprodukten (4, 5) eines zumindest teilweise korrodierten Bauteils (1, 120, 130) aus Metall und/oder aus zumindest einer Metallverbindung,
wobei das Bauteil (1, 120, 130) aufgrund der Korrosion abtragungsresistentere Bereiche aufweist,
das folgende Schritte umfasst:
Aufbringung eines mehrkomponentigen Reinigungsmittels (10) auf das korrodierte Bauteil (1, 120, 130),
wobei das Reinigungsmittel (10) zumindest eine Imprägnierkomponente (13),
die in das Bauteil (1, 120, 130) diffundieren kann, enthält,
Wärmebehandlung des korrodierten Bauteils (1, 120, 130) mit dem Reinigungsmittel (10),
Bildung von zumindest einer Opferzone (25) zumindest teilweise in den abtragungsresistenteren Bereichen des korrodierten Bauteils (1, 120, 130) aufgrund der Wärmebehandlung,
indem eine zumindest die Imprägnierkomponente (13) in Kontakt mit dem Bauteil (1, 120, 130) kommt,
wodurch die Abtragungsresistenz der bisherigen abtragungsresistenteren Bereichen zumindest verringert wird,
Abtragung der zumindest einen Opferzone (25),
wodurch auch nahezu sämtliche Korrosionsprodukte (4, 5) abgetragen werden.

35. Verfahren nach Anspruch 34,
**dadurch gekennzeichnet, dass**
die zumindest eine Opferzone (25) zumindest teilweise durch Bereiche des Bauteils (1) gebildet wird,
die die zumindest eine Imprägnierkomponente (13) aufweisen.

36. Verfahren nach Anspruch 34,
**dadurch gekennzeichnet,**
**dass** das Reinigungsmittel (10) als zumindest eine Imprägnierkomponente (13) zumindest eine Metallkomponente (13) aus einem Metall oder einer Metalllegierung oder eine metallhaltige Komponente (13) aufweist,
**dass** insbesondere das Reinigungsmittel (10) eine Zusammensetzung nach einem oder mehreren der Ansprüche 1 bis 26 aufweist.

37. Verfahren nach Anspruch 34 oder 36,
**dadurch gekennzeichnet, dass**
über die zumindest eine gasförmige Verbindung die zumindest eine Imprägnierkomponente (13) in Kontakt mit dem Bauteil (1) kommt oder auf das Bauteil (1) auftragen wird, wodurch eine Diffusion der zumindest einen Imprägnierkomponente (13) in das Bauteil (1) ermöglicht wird.

38. Verfahren nach Anspruch 34, 36 oder 37,
**dadurch gekennzeichnet,**
**dass** die Metallkomponente (13) aus Aluminium ist oder die metallhaltige Komponente (13) Aluminium enthält.

39. Verfahren nach Anspruch 34 oder 38,
**dadurch gekennzeichnet,**
**dass** die zumindest eine Opferzone (25) zumindest teilweise Aluminium oder Aluminiumverbindungen aufweist.

40. Verfahren nach einem oder mehreren der Ansprüche 34 bis 39,
**dadurch gekennzeichnet,**
**dass** das Reinigungsmittel (10) nur lokal auf einer Oberfläche (7) des Bauteils (1) aufgebracht ist.

41. Verfahren nach Anspruch 34 oder 40,
**dadurch gekennzeichnet,**
**dass** das Reinigungsmittel (10) eine pastenartige Konsistenz aufweist,
insbesondere dass das Reinigungsmittel (10) als eine weitere Komponente zumindest einen Binder zur Herstellung der pastenartigen Konsistenz des Reinigungsmittels (10) aufweist.

42. Verfahren nach Anspruch 34,
**dadurch gekennzeichnet,**
**dass** das korrodierte Bauteil (1) ein Schichtsystem (16) mit einer Schicht (22), insbesondere eine beschichtete Turbinenschaufel, ist.

43. Verfahren nach Anspruch 34,
**dadurch gekennzeichnet,**
**dass** die Schicht (22) eine MCrAlY-Schicht ist.

44. Verfahren nach Anspruch 34,
**dadurch gekennzeichnet,**
**dass** äußere Korrosionsprodukte (4) in der Oberfläche (7) des Bauteils (1, 16) vorhanden sind.

45. Verfahren nach Anspruch 34,
**dadurch gekennzeichnet,**
**dass** innere Korrosionsprodukte (5) unterhalb der Oberfläche (7) des Bauteils (1, 16) vorhanden sind.

46. Verfahren nach Anspruch 34,
**dadurch gekennzeichnet,**
**dass** in einem Zwischenschritt das Reinigungsmittel (10) nach der Wärmebehandlung entfernt wird.

47. Verfahren nach Anspruch 34,
**dadurch gekennzeichnet,**
**dass** in einem Zwischenschritt die zumindest eine Opferzone (25) in der Tiefe des Bauteils (1) durch eine Thermobehandlung vergrößert wird.

48. Verfahren nach Anspruch 47,
**dadurch gekennzeichnet,**
**dass** eine Temperatur der Thermobehandlung zumindest teilweise oberhalb der Temperatur der Wärmebehandlung liegt.

49. Verfahren nach Anspruch 47 oder 48,
**dadurch gekennzeichnet,**
**dass** die Temperatur der Thermobehandlung ein Lösungsglühen des Bauteils (1) ermöglicht.

50. Verfahren nach Anspruch 34,
**dadurch gekennzeichnet,**
**dass** das Reinigungsmittel (10) auf eine Oberfläche (7) des Bauteils (1) im Bereich der Korrosionsprodukte (4, 5) aufgetragen wird.
